(19) Europäisches Patentamt

European Patent Office

Office européen des brevets

(11) **EP 2 037 194 B1**

(12) **EUROPÄISCHE PATENTSCHRIFT**

(45) Veröffentlichungstag und Bekanntmachung des Hinweises auf die Patenterteilung:
**20.07.2011  Patentblatt 2011/29**

(21) Anmeldenummer: **07017579.9**

(22) Anmeldetag: **07.09.2007**

(51) Int Cl.:
*F24J 2/52* *(2006.01)*     *H01L 31/042* *(2006.01)*

(54) **Unterkonstruktion für Solarfreiflächenanlagen**

Subconstruction for solar plants on open space

Infrastructure pour installations solaires en espace libre

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**18.03.2009   Patentblatt 2009/12**

(73) Patentinhaber: **Energetico GmbH & Co. KG 95502 Himmelkron (DE)**

(72) Erfinder:
• **Mohr, Thomas**
**86938 Schondorf  a. Ammersee (DE)**

• **Stübinger, Jürgen**
**95349 Thurnau (DE)**
• **Münch, Mario**
**96369 Weissenbrunn (DE)**

(74) Vertreter: **Küchler, Stefan**
**Patentanwalt**
**Färberstrasse 20**
**90402 Nürnberg (DE)**

(56) Entgegenhaltungen:
DE-U1-202005 008 159     DE-U1-202005 012 993
DE-U1-202006 011 393     DE-U1-202006 012 495
DE-U1-202006 014 047     JP-A- 57 087 561

## Beschreibung

Die Erfindung richtet sich auf eine Vorrichtung zur Aufständerung von Solarmodulen, mit mehreren, in einer Reihe aufgestellten und verankerten Pfosten, an denen im Bereich ihrer oberen Enden etwa quer zu der Pfostenreihe ausgerichtete Träger befestigt sind, und sind (Querträger), und mit mehreren, etwa parallel zu der Pfostenreihe verlaufenden Trägern (Längsträgern), welche an den Querträgern festgelegt sind.

Mit dem Bewußtwerden der schädlichen Nebeneffekte der Energieerzeugung aus fossilen Energieträgern - insbesondere Raubbau an kostbaren Bodenschätzen, Umweltbelastung, vor allem steigender Kohlendioxidgehalt in der Luft mit einer nicht mehr überschaubaren Anzahl von negativen Sekundäreffekten - steigt das Interesse an "sauberer" Energie, bei deren Gewinnung weder begrenzte Ressourcen ausgebeutet werden noch die Umwelt belastet wird. Aufgrund derzeit verfügbarer Technologien kommen hierfür vor allem Wasserkraft, Wind- und Sonnenenergie in Frage. Die Sonnenenergie kann in Form von Biomasse gewonnen werden als auch direkt mittels Solarmodulen, insbesondere Heißwasserkollektoren und Photovoltaikmodulen. Von all diesen sind die Photovoltaikmodule von den Gestehungskosten am aufwendigsten. Daher wurde diese Form der Energiegewinnung bislang vor allem bei einzelnen Anwendungen auf Hausdächern eingesetzt. Nachdem in letzter Zeit jedoch preiswerte Montagesysteme für derartige Anlagen vorgeschlagen wurden, geht man vermehrt dazu über, immer größere Solaranlagen, insbesondere Photovoltaikanlagen, zu installieren, bis hin zu Spitzenleistungen von einigen Megawatt pro Anlage. Eine solche Maßnahme ist, auf eine Nachführung der Solarmodule zu verzichten und dieselben stattdessen auf einen mittleren Sonnenstand auszurichten. Solche statische Montagesysteme wurden auf einfachste Mittel reduziert - eine oder mehrere, etwa in Ost-West-Richtung verlaufende Reihen von in den Boden gerammten Pfosten, entlang dieser Pfostenreihen festgelegte Längsträger sowie quer dazu verlaufende Querträger zum Abstützen der flächig daraufgelegten und befestigten Solarmodule.

Eine davon leicht abweichende Aufständerung ergibt sich aus dem Gebrauchsmuster DE 20 2005 008 159 U1. Hier wird an jedem Pfosten ein geneigter Querträger befestigt. Sodann können zwei oder mehrere Längsträger zwischen zwei benachbarten Querträger-Pfosten-Einheiten in variablem gegenseitigen Abstand montiert werden, so dass mit einer derartigen Anordnung auch Photovoltaikmodule unterschiedlicher Größen gehaltert werden können. Allerdings dient die Oberfläche eines mittigen Querträgers einer Modulreihe dabei zur Montage von Längsträgern, welche in entgegengesetzten Richtungen zu den beiden jeweils benachbarten Querträger-Pfosten-Einheiten verlaufen.

Bei immer größer werdenden Anlagen stößt eine solche Montageweise jedoch an ihre Grenzen: In Mitteleuropa stehen häufig nicht entsprechend große, landwirtschaftliche Flächen von mehreren ha Grundfläche zur Verfügung, welche derart flach bzw. eben wären, dass die in Längsrichtung der Pfostenreihen verlaufenden Längsträger von einem Ende der Pfostenreihe bis zum anderen in einer exakten Geraden verlaufen könnten, ohne dass ihr Abstand zum Erdboden dabei zumindest bereichsweise zu groß oder zu klein würde. Bspw. müßten in einer Mulde die Pfosten viel zu hoch werden, so dass selbst bei mäßiger Windlast leicht instabil werden; hinter Kuppen gar würden die an einem Hang zunächst bergan laufenden Längsträger schnell schwindelerregende Höhen erreichen, welche von bekannten Konstruktionen nicht mehr beherrscht werden. Dabei ist es im Hinblick auf derartige konstruktive Nachteile unerheblich, ob die Längsträger unterhalb oder oberhalb der Querträger verlaufen.

Aus diesen Nachteilen des bekannten Standes der Technik resultiert das die Erfindung initiierende Problem, eine gattungsgemäße Vorrichtung zur Aufständerung von Solarmodulen derart weiterzubilden, dass damit auch in hügeligem Gelände leistungsstarke Solaranlagen installiert werden können.

Die Lösung dieses Problems gelingt dadurch, dass an wenigstens einem Pfosten zwei Querträger befestigt sind, derart, dass die Neigung der Oberseiten ihrer Profile gegenüber der Horizontalen unabhängig voneinander ist, wobei die Ebenen der Oberseiten beider Querträger eines gemeinsamen Pfostens zusammenfallen oder parallel zueinander verlaufen oder sich im Bereich des Pfostenkopfs schneiden, und wobei sich die Längsträger nicht über den Spalt zwischen zwei benachbarten Querträgern desselben Pfostens hinweg erstrecken.

Da die Querträger wiederum die Längsträger tragen und jene an nur zwei Querträgern benachbarter Pfosten ausreichend festlegbar sind, lassen sich an jedem Pfosten die Längsträger unterbrechen - die pfostenparellele Reihe von Solarmodulen kann in regelmäßigen Abständen unterteilt werden, so dass die einzelnen Abschnitte zumindest in ihrer Ost-West-Steigung dem Gelände angepaßt werden können, während natürlich die Nord-Süd-Neigung der Solarmodule möglichst überall dem gewünschten Mittelwert entsprechend gewählt werden kann. Die Einhaltung der gewünschten Nord-Süd-Neigung ist jedoch kein Hindernis, da die Querträger ohnehin stets nur an einem einzigen Pfosten befestigt sind - selbst wenn in Einzelfällen ein zweiter Stützpfosten pro Querträger verwendet werden sollte, so wären diese jedoch sehr nah bei nander und die Querträger viel zu kurz, um mit einer Geländeunebenheit in Konflikt zu geraten.

Es hat sich als günstig erwiesen, dass die Neigung der Längsachse des Profils eines Querträgers gegenüber der Horizontalen 15° beträgt oder mehr, vorzugsweise 20° oder mehr, insbesondere 25° oder mehr. Andererseits empfiehlt die Erfindung, für die Neigung der Längsachse des Profils eines Querträgers gegenüber der Horizontalen einen Winkel von 40° oder weniger zu wählen, vorzugsweise 35° oder weniger, insbesondere 30° oder weniger. Bei dem bevorzugten Winkelbereich ergibt sich in unseren Breitengraden über das Jahr hinweg ein optimaler Ertragswert.

Weitere Vorteile ergeben sich dadurch, dass die an dem selben Pfosten befestigten Querträger nur über den gemeinsamen Pfosten, jedoch nicht über dazwischen oder darüber hinweg laufende Längsträger miteinander verbunden sind. Da - wie die Erfindung weiterhin vorsieht - ein Querträger etwa in der Mitte zwischen seinen beiden Stirnseiten mit dem betreffenden Pfosten verbunden ist, könnten die freien Enden der beiden Querträger eines gemeinsamen Pfostens in weiten Grenzen gegeneinander verstellt werden. Außerdem können die von benachbarten Enden der an einem gemeinsamen Pfosten festgelegten Querträger ausgehenden, in etwa entgegengesetzte Richtungen weisenden Längsträger unterschiedlichen Neigungswinkeln folgen und somit eine Art Knick miteinander einschließen und/oder einen Versatz aufweisen, was die Anpassung an unebenes Gelände erlaubt.

Es liegt im Rahmen der Erfindung, dass die an dem selben Pfosten befestigten Querträger in zueinander etwa parallelen Vertikalebenen verlaufen. Dadurch schneiden sich ihre Längsrichtungen nicht, und selbst große benachbarte Querträger kommen daher nicht miteinander in Konflikt.

Indem die an dem selben Pfosten befestigten Querträger oder deren Vertikalebenen einen Abstand voneinander aufweisen, besteht überdies ein Längenausdehnungsspielraum, so dass bei größeren Temperaturschwankungen - bspw. -25° im Winter gegenüber +45° im Sommer - keine übermäßigen Temperaturspannungen auftreten. Werden die Längsträger ausschließlich im Bereich der freien Enden von Querträgern benachbarter Pfosten festgelegt, können sich die Querträger entsprechend verbiegen, derart, dass ihre Enden sich bei Bedarf einander annähern oder voneinander entfernen.

Aus Sicherheitsgründen sollte daher der Abstand zwischen den am selben Pfosten befestigten Querträgern oder zwischen deren Vertikalebenen gleich 2 cm sein oder größer, vorzugsweise 3 cm oder größer, insbesondere 4 cm oder größer. Ein solcher Abstand bietet ausreichende Reserven für starke Relativbewegungen innerhalb der Solaranlage.

Andererseits braucht der Abstand zwischen den am selben Pfosten befestigten Querträgern oder zwischen deren Vertikalebenen nicht größer zu sein als 8 cm, vorzugsweise nur 7 cm oder kleiner, insbesondere nur 6 cm oder kleiner.

Wenn der Abstand zwischen den am selben Pfosten befestigten Querträgern oder zwischen deren Vertikalebenen etwa der dazu parallelen Breite des betreffenden Pfostens entspricht, so lassen sich die Querträger an einander gegenüber liegenden Längsseiten eines an einem Pfosten festgelegten Abstandskörpers befestigen, was zu einer besonders einfachen Konstruktion führt.

Zur Befestigung kann ein solcher Abstandskörper wenigstens eine, vorzugsweise zwei oder mehr Bohrungen aufweisen, welche von einer Längsseite zur anderen durchgehend ausgebildet sind. Über damit fluchtende Bohrungen in den angeschlossenen Querträgern durchgreifende Schrauben kann dadurch eine reib-und/oder formschlüssige Verbindung zwischen Querträgern und Abstandskörper bewirkt werden.

Bevorzugt ist ein solcher Abstandskörper als Profil mit einem konstanten Querschnitt ausgebildet. Dabei verläuft die Längsachse eines solchen Abstandskörpers bevorzugt etwa mittig zwischen den beiden angeschlossenen Querträgern, so dass der konstante Querschnitt des Abstandskörpers die Ausrichtung der betreffenden Querträger in zueinander parallelen Ebenen sicherstellt.

Aus Gewichtsgründen sowie zur Materialersparnis kann der Abstandskörper als Hohlprofil ausgebildet sein.

Bewährt haben sich besonders Abstandskörper mit einem rechteckigen oder quadratischen Außenquerschnitt, weil hier die obere und untere Längsseite etwa lotrecht zu den beiden vertikal verlaufenden Längsseiten orientiert sind und relativ unbedenklich auf Druck belastet werden können.

Eine weitere Konstruktionsvorschrift sieht vor, dass eine oder vorzugsweise beide Stirnseiten des Abstandskörpers entlang je einer Ebene verlaufen, die von der Längsachse des Abstandskörper-Profils nicht lotrecht durchsetzt wird, sondern unter einem Winkel von 75° oder weniger, vorzugsweise unter einem Winkel von 70° oder weniger, insbesondere unter einem Winkel von 65° oder weniger. Damit korrespondiert eine Dimensionierung dahingehend, dass eine oder vorzugsweise beide Stirnseiten des Abstandskörpers entlang je einer Ebene verlaufen, die von der Längsachse des Abstandskörper-Profils unter einem Winkel von 50° oder mehr durchsetzt wird, vorzugsweise unter einem Winkel von 55° oder mehr, insbesondere unter einem Winkel von 60° oder mehr. Dabei sollten die Zwischenwinkel der beiden Stirnseiten derart aufeinander abgestimmt sein, dass beiden Stirnseiten des Abstandskörpers entlang zueinander paralleler Ebenen verlaufen.

Wird ein solcher Abstandskörper parallel zu den angrenzenden Querträgern ausgerichtet, so verlaufen seine Stirnseiten entlang von vertikalen Ebenen und erleichtern daher die Montage an den vertikalen Pfosten. Zwecks eben dieser Montage ist ein Abstandskörper im Bereich seiner Stirnseiten an je einer Befestigungsplatte festgelegt ist, bspw. mit denselben verschweißt.

Aufgrund der obigen Dimensionierungsvorschrift sind dann auch diese beiden Befestigungsplatten parallel zueinander und erlauben es, den Abstandskörper zusammen mit seinen Befestigungsplatten im Bereich des oberen Endes eines Pfostens festzulegen, insbesondere als diesen zwischen zwei einander gegenüberliegenden Längsseiten übergreifendes Pfostenkopfelement.

Da die Längsachse des Abstandskörpers geneigt verläuft, liegen die unteren Enden der Befestigungsplatten etwa auf gleichem Niveau, wenn eine der beiden Befestigungsplatten länger ist als die andere, bspw. um 20 mm länger oder mehr, vorzugsweise um 30 mm oder mehr, insbesondere um 40 mm oder mehr,

Vorzugsweise wird ein Pfostenkopfelement an dem betreffenden Pfosten festgeschraubt. Diese Verbindungstechnik erlaubt eine Montage mit einfachen Mitteln vor Ort, so dass die Pfosten und Pfostenkopfelemente gesondert angeliefert werden können. Vor der Montage der Pfostenkopfelemente werden die Pfosten an der jeweils gewünschten Stelle in den Boden gerammt, wobei auf deren obere Stirnseite hohe Kräfte einwirken können. Erst im Anschluß daran werden die sensiblen Pfostenkopfelemente aufgeschraubt sowie die Quer- und Längsträger montiert.

Zur Verschraubung mit den Pfosten weisen die Befestigungsplatten im Bereich ihres jeweils unteren Endes je eine horizontal durchgehende Bohrung auf.

Eine statisch ausgewogene Konstruktion ergibt sich, wenn jeweils eine Durchgangsbohrung in den beiden Befestigungsplatten im Bereich von deren unteren Enden gleiche Abstände zu dem betreffenden unteren Plattenende aufweisen, insbesondere miteinander fluchten.

Da die Verankerung der Pfosten im Erdreich sich oftmals nicht auf den Millimeter genau bewerkstelligen läßt - das Einrammen erfolgt schlagweise und kann leicht dazu führen, dass ein Pfosten um einige Millimeter zu tief sitzt - sieht die Erfindung zur Kompensation dergestalt vor, dass mindestens je eine, vorzugsweise jede Durchgangsbohrung der Befestigungsplatten im Bereich ihres unteren Endes als Langloch ausgebildet ist und eine Höhenverstellung des Pfostenkopfelements gegenüber dem betreffenden Pfosten erlaubt. Diese Langlöcher erlauben auch eine Einstellung des Neigungswinkels der Pfostenkopfelemente und Querträger.

Besondere Vorteile erhält man dadurch, dass die Querprofile einen winkel-, U-oder C-förmigen Querschnitt aufweisen mit zwei Schenkeln, welche entweder in einem Winkel zueinander verlaufen oder etwa parallel zueinander und solchenfalls durch einen Mittelsteg untereinander verbunden sind. Ein solches Profil ist begrenzt biegsam und kann daher ebenfalls für Ausgleichszwecke herangezogen werden.

Vorzugsweise liegen die Querträger jeweils mit den Außenseiten eines Schenkels (bei Profilen mit winkelförmigem Querschnitt) oder mit den Außenseiten ihrer Mittelstege (bei U- oder C-förmigem Profil) flächig an dem betreffenden Abstandskörper und/oder Pfostenkopfelement an. Durch die große Anlagefläche ergibt sich ein guter Reibschluß zwischen den aneinander grenzenden Elementen. Während die jeweils oben liegenden Schenkel der Montage der Längsträger und/oder Solarmodule dienen, können ggf. vorhandene untere, dazu parallele Schenkel (bei U- oder C-förmigem Querschnitt) in das Profil eingelegte Stromkabel führen bzw. stützen.

Die dem betreffenden Abstandskörper nächstgelegenen Kanten der Oberseiten beider Querträger eines gemeinsamen Pfostens sollten etwa parallel zueinander verlaufen, entsprechend der für die gesamte Solaranlage üblicherweise genormten Nord-Süd-Neigung der Solarmodule. Diese Parallelausrichtung wird daher in fast allen Fällen angestrebt werden.

Je nach den örtlichen Geländeverhältnissen ergeben sich allerdings für die Ebenen der Oberseiten beider Querträger eines gemeinsamen Pfostens mehrere Möglichkeiten: Diese können entweder zusammenfallen (nämlich in flachem und ebenen Gelände, wo aneinander anschließende Längsträger miteinander fluchten) oder parallel zueinander verlaufen (wenn das Gelände in Ost-West-Richtung geneigt verläuft und daher die Längsträger nicht rechtwinklig zu den vertikalen Pfosten verlaufen, also einen Versatz in vertikaler Richtung aufweisen) oder sich im Bereich des Pfostenkopfes schneiden (in Gelände mit einer Wölbung in Ost-West-Richtung, bspw. Kuppen oder Mulden, so dass die aneinander anschließenden Längsträger einen Knick bilden).

Zu ihrer Stabilisierung sollten ein oder mehrere Längsträger an den Oberseiten von einander benachbarten Querträgern unterschiedlicher Pfosten festgelegt sein.

Durch eine solche Verbindung mit wenigstens jeweils zwei etwa um den Abstand zweier benachbarter Pfosten voneinander entfernten Querträgern ergibt sich eine äußerst belastbare Konstruktion, die auch erheblichen Windlasten widerstehen kann.

Die Erfindung empfiehlt, dass ein oder mehrere Längsträger einen U- oder C-förmigen Querschnitt aufweisen mit zwei Seitenschenkeln und einem dieselben miteinander verbindenden Mittelsteg. Eine derartiges, doppelt abgewinkeltes U-oder C-Profil hat eine vergleichsweise hohe Biegesteifigkeit und kann daher auch Pfostenabstände von etwa zwei bis vier Metern ohne merkliche Durchbiegung überbrücken.

Vorzugsweise liegen solche Längsträger mit jeweils einem ihrer beiden Seitenschenkel - welches dann die Unterseite bildet - flächig auf der Oberseite eines Querträgers auf, während an ihren jeweils oberen Seitenschenkeln die Montage der Solarmodule erfolgen kann.

Weitere Vorzüge ergeben sich dadurch, dass wenigstens ein Längsträger derart befestigt ist, dass die Mittellinie seiner offenen Längsseite auf einem höheren Niveau liegt als die Mittellinie seines Mittelstegs. Sodann lassen sich Stromführungskabel in den einseitig offenen Hohlraum des Profils einlegen und werden von demselben geführt - bspw. zu einem angrenzenden Querträger und von dort über einen Pfosten zum Boden - ohne selbsttätig aus dem betreffenden Hohlraum herausrutschen zu können.

Zur Montage der Solarmodule lassen sich an den Oberseiten zweier Längsträger, welche an den selben Querträgern festgelegt sind, ein oder mehrere Montageprofile festlegen. Solche Montageprofile sind insbesondere dann erforderlich, wenn die Abstände zwischen jeweils zwei zueinander parallelen, benachbarten Quer- und/oder Längsträgern größer sind als die Abmessungen eines Solarmoduls, so dass es durch diese Träger allein nicht ausreichend abgestützt würde. Dies wird meistens der Fall sein, da die Pfosten aus Gründen der Arbeitserleichterung im Allgemeinen relativ weit auseinander gesetzt werden, sowohl in Ost-West-Richtung als auch in Nord-Süd-Richtung, so dass die Quer- und Längsträger entsprechend lang zu bemessen sind, bspw. jeweils zwei bis drei Meter lang, während übliche Solarmodule meistens nur eine Länge von etwa ein bis zwei Metern aufweisen.

Wenigstens ein derartiges Montageprofil kann als Hohlprofil ausgebildet sein. Hohlprofile haben ein äußerst günstiges Gewicht im Verhältnis zu ihrer Stabilität. Wenn - wie die Erfindung weiterhin vorsieht - ein solches Hohlprofil an seinen Längsseiten rundum geschlossen ist, also bspw. nach Art eines Vierkantprofils, so ergibt sich eine maximale Steifigkeit auch bei einem reduzierten Querschnitt, so dass die Länge der Kanten des Profilquerschnitts bei einem solchen Montageprofil kleiner sein kann als bei den Quer- und/oder Längsträgern.

Zur Vereinfachung der Befestigung sollte wenigstens ein Montageprofil an seiner Ober- und/oder Unterseite einen hinterschnittenen Bereich aufweisen. Dieser kann bei Bedarf von einem Schraubenkopf hintergriffen werden, um das Montageprofil mit einem Längs- oder Querträger einerseits und/oder mit Elementen zum Befestigen eines Solarmoduls andererseits zu verbinden.

Ein solcher, hinterschnittener Bereich kann Bestandteil (je) einer entlang der Ober- und/oder Unterseite des Montageprofils verlaufenden Nut sein. Solchenfalls kann der Kopf einer Befestigungsschraube, eine Mutter oder ein sonstiges Innengewindeelement im Bereich einer Profilstirnseite in diese Nut eingeführt und sodann innerhalb der Nut an die gewünschte Stelle verschoben werden. Der Schaft dieser oder einer in ein solches Innengewindeelement eingedrehten Schraube ragt aus der Nut heraus, durchgreift eine Bohrung des anzuschließenden Bauteils und ist an dessen gegenüberliegender Seite gekontert, entweder durch eine aufgeschraubte Mutter od. dgl. oder eben durch den Kopf der Schraube selbst, die in das in der Nut verankerte Bauteil eingeschraubt ist.

Schließlich entspricht es der Lehre der Erfindung, dass an der Oberseite wenigstens eines Montageprofils, insbesondere in einer dortigen Nut, eine ein Solarmodul übergreifende Klammer festgelegt oder festlegbar ist. Damit kann das Solarmodul mit einer definierten Kraft festgeklemmt werden. Zu Schonung des Solarmoduls kann an der Unterseite der Klammer ggf. ein (druck-) elastisches, bspw. gummiartiges Element vorgesehen sein, welches bei der Montage auf der Ober- bzw. Vorderseite des Solarmoduls aufliegt.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

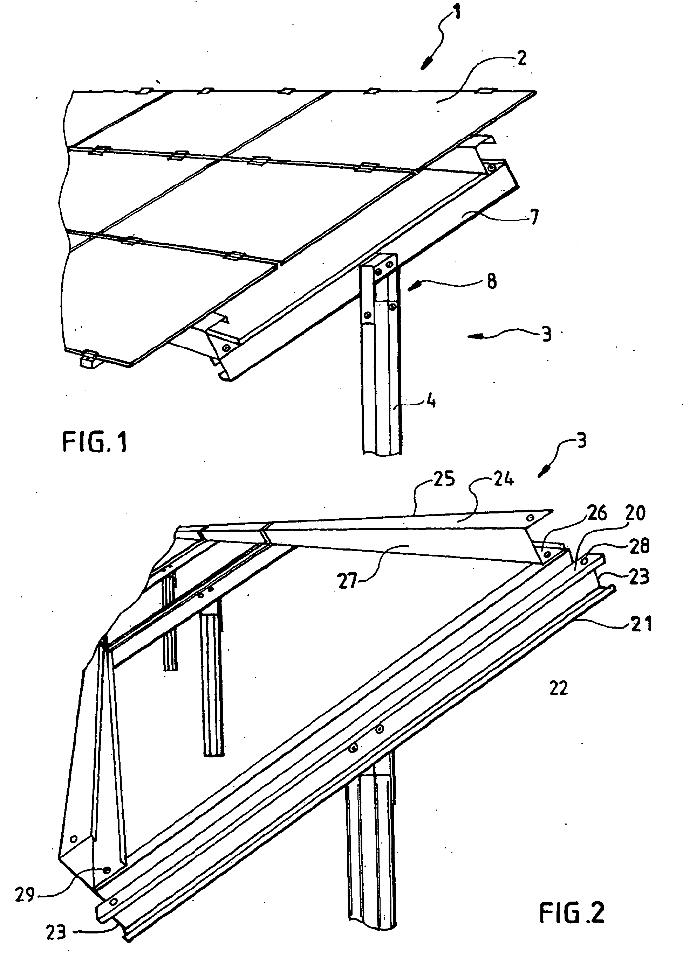

Fig. 1 eine Solaranlage mit einer erfindungsgemäßen Aufständerung in einer perspektivischen Ansicht aus einer mehr südlichen Richtung gesehen;

Fig. 2 einen Teil der Vorrichtung zur Aufständerung der Solarmodule der Solaranlage aus Fig. 1 in einer entsprechenden Darstellung, jedoch vor der Montage der Solarmodule;

Fig. 3 einen Ausschnitt aus der Fig. 1 in einer vergrößerten Darstellung;

Fig. 4 das Pfostenkopfelement aus Fig. 3 in einer Seitenansicht;

Fig. 5 die Solaranlage aus Fig. 1, ebenfalls in einer perspektivischen Darstellung, allerdings aus einer mehr nördlichen Richtung gesehen.

Fig. 6 eine perspektivische Teilansicht auf die Fig. 5 etwa in einer zur Längsrichtung eines Längsträgers parallelen Blickrichtung;

Fig. 7 eine perspektivische Teilansicht auf die Fig. 6 etwa in einer zu der Längsrichtung eines Querträgers oder eines Montageprofils parallelen Blickrichtung; sowie

Fig. 8 eine Ansicht auf die Fig. 7, schräg von oben.

In der Zeichnung erkennt man eine Vielzahl von in einer Matrix 1 spalten- und zeilenweise über- bzw. nebeneinander angeordneten Solarmodulen 2. Diese Modulmatrix 1 wird getragen von einer gemeinsamen Ständerkonstruktion 3 und bildet eine in Ost-West-Richtung verlaufende Reihe eines größeren Solarfeldes mit mehreren solcher Reihen, die wiederum in Nord-Süd-Richtung hintereinander angeordnet sind.

Die Ständer- bzw. Tragkonstruktion 3 für die Modulmatrix 1 umfaßt eine Reihe von Pfosten 4, die in einer gemeinsamen, vorzugsweise in Ost-West-Richtung verlaufenden Flucht angeordnet sind.

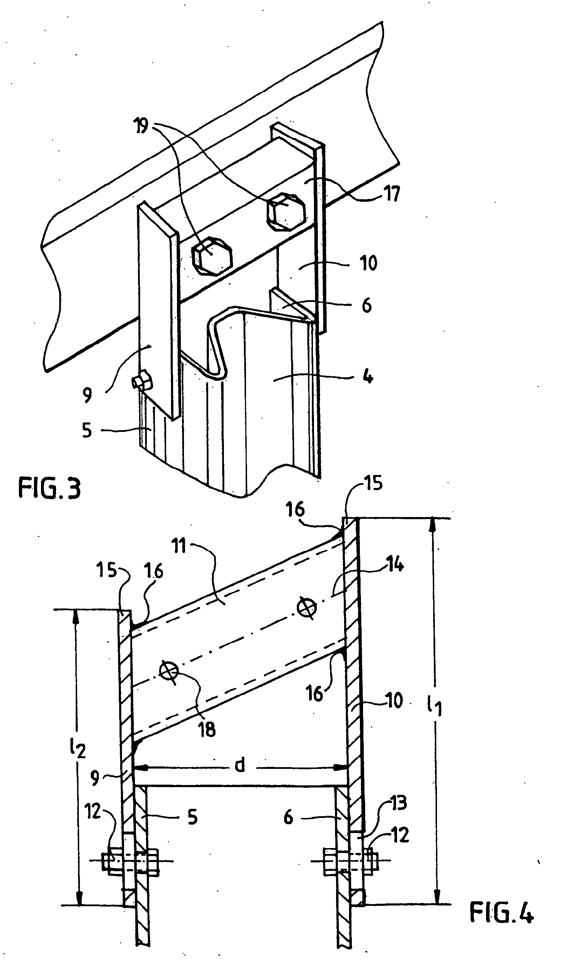

Jeder Pfosten 4 besteht aus einem Profil mit gleichbleibendem Querschnitt, vorzugsweise einem sog. Sigma-Profil, dessen Querschnitt etwa dem griechischen Buchstaben Σ entspricht, wie bspw. der Fig. 3 zu entnehmen ist. Ähnlich einem U-Profil weisen diese Σ-Profile zwei zueinander etwa parallele Seitenschenkel 5 auf, die durch einen Mittelsteg 6 miteinander verbunden sind, wobei allerdings der Mittelsteg 6 nicht eben ist wie bei einem U-Profil, sondern zwei winklig zueinander verlaufende Flächen aufweist. Statt Σ-Profilen lassen sich ggf. auch andere Profile verwenden, bspw. I-Profile oder U-Profile oder Vierkanthohlprofile.

Diese Σ-Profile 4 sind im Boden verankert, insbesondere in mehr oder weniger weiches Erdreich eingerammt oder einbetoniert, und zwar vorzugsweise derart, dass die Ebenen der beiden zueinander etwa parallelen Flachseiten bzw. Seitenschenkel 5 aller Σ-Profile 4 einer gemeinsamen Konstruktion 3 etwa parallel zueinander verlaufen, und zwar vorzugsweise parallel zu der von eben diesen Pfosten 4 aufgespannten Flucht, insbesondere also in Ost-West-Richtung. Dies hat den Vorteil, dass die Pfosten 4 ihre höchste Biegestabilität in Nord-Süd-Richtung aufweisen, also in der Richtung, wo die Windlast - bedingt durch die Neigung der Solarmodule 2 in Nord-Süd-Richtung - am größten ist.

Eben diese Neigung der Solarmodule 2 in Nord-Süd-Richtung wird hervorgerufen durch den geneigten Verlauf der Längsachsen von an den Pfosten 4 festgelegten Profilen, welche quer zur betreffenden Pfostenreihe verlaufen - bevorzugt also in Nord-Süd-Richtung - und deshalb als Querträger 7 bezeichnet werden sollen. Der Verbindung der Querträger 7 mit den Pfosten 4 dient je ein Pfostenkopfelement 8 pro Pfosten 4.

Jedes Pfostenkopfelement 8 hat einen brückenartigen Aufbau, bestehend aus drei miteinander verbundenen Teilen: Zwei vertikale, zueinander etwa parallele Seitenschenkel 9, 10, die im Bereich ihrer Oberkanten durch einen quer verlaufenden Steg 11 miteinander verbunden sind. Die beiden Seitenschenkel 9, 10 haben jeweils die Form einer Platte, deren vertikale Grundebenen zueinander parallel verlaufen, und zwar in einem Abstand, der etwa dem Abstand zwischen den Außenseiten der beiden Seitenschenkel 5 eines Σ-Profils 4 entspricht.

Daher kann ein derartiges Pfostenkopfelement 8 oben auf einen Pfosten 4 aufgesteckt werden, derart, dass seine beiden Seitenschenkel 9, 10 flächig an den Außenseiten der beiden Flachseiten 5 des Σ-Profils 4 anliegen. Diese Seitenschenkel 9, 10 dienen als Befestigungsplatten, welche mittels wenigstens je einer Schraube 12 mit der angrenzenden Flachseite 5 des Σ-Profils 4 verbunden werden. Zu diesem Zweck ist für jede Schraubverbindung 10 in einer der Flachseiten 5 des Σ-Profils 4 sowie in der betreffenden Befestigungsplatte 9, 10 jeweils ein Loch 13 oder eine sonstige Ausnehmung zum Durchstecken der Schraube 12 vorgesehen. Jeweils ein Loch 13 pro Schraubverbindung, vorzugsweise dasjenige in der betreffenden Befestigungsplatte 9, 10, ist als vertikales Langloch ausgebildet, um eine begrenzte Verstellung des Pfostenkopfelements 8 gegenüber dem Pfosten 4 zu ermöglichen. Dies ist wichtig, weil das Einrammen der Pfosten 4 manchmal nicht millimetergenau machbar ist.

Eine der beiden Befestigungsplatten 10 ist länger als die andere Befestigungsplatte 9. Da die Unterkanten der länglichen Platten mit vertikaler Längsachse jedoch auf dem selben Niveau liegen, erhebt sich die längere Befestigungsplatte 10 über die kürzere Befestigungsplatte 9. Entsprechend der Neigung der Solarmodule in Nord-Süd-Richtung ist auf der nördlichen Erdhalbkugel die jeweils nördliche Befestigungsplatte 10 höher als die südliche Befestigungsplatte 9; auf der südlichen Erdhalbkugel wäre dies genau umgekehrt.

Der beide Befestigungsplatten in deren oberen Bereich miteinander verbindende Steg 11 ist aus einem Hohlprofil gefertigt, vorzugsweise aus einem Vierkantprofil, insbesondere von etwa quadratischem Querschnitt. Vorzugsweise ist eine Kantenlänge dieses Profilquerschnitts etwa gleich der Breite der beiden Befestigungsplatten 9, 10.

Das diese Befestigungsplatten 9, 10 verbindende Profil 11 ist relativ kurz. Allerdings ist es nicht rechtwinklig zu seiner Längsachse abgelängt, sondern unter - gleichen - Winkeln α ungleich 90°; vorzugsweise gilt für den Winkel α etwa:

$$\alpha = \sin\left[(l_1 - l_2)/d\right],$$

wobei

$l_1$ = Länge der längeren bzw. nördlichen Befestigungsplatte;
$l_2$ = Länge der kürzeren bzw. südlichen Befestigungsplatte;
d = Abstand zwischen den beiden Befestigungsplatten.

Die beiden Schnitte sind parallel zueinander und in einem Abstand d, so dass das Profil 11 genau zwischen die beiden Befestigungsplatten 9, 10 eingefügt werden kann, und zwar derart, dass die beiden Schnittflächen jeweils bündig an der angrenzenden Befestigungsplatte 9, 10 anliegen und dabei die Längsachse 14 des Profils 11 parallel zu der Verbindungslinie zwischen den Oberkanten 15 der beiden Befestigungsplatten 9, 10 verläuft. In diesem Zustand ist das Profil 11 mit den beiden Befestigungsplatten 9, 10 verbunden, vorzugsweise durch je eine entlang der Schnittfläche rundum laufenden Schweißnaht 16.

Dabei ergeben sich an jedem Pfostenkopfelement 8 zwei zueinander parallele, vertikale Längsseiten 17 des Verbindungsstegs 11, deren Abstand etwa der Breite einer Befestigungsplatte 9, 10 entspricht. Diese beiden, einander gegenüber liegenden Längsseiten 17 dienen der Verankerung je eines Querträgers 7 und verfügen zu diesem Zweck über wenigstens je eine, vorzugsweise jeweils zwei Bohrungen 18, vorzugsweise auf Höhe der Längsachse 14. Jeweils zwei Bohrungen 18 in unterschiedlichen Längsseiten 17 fluchten miteinander, so dass eine entsprechend lange Schraube 19 durch zwei solche Bohrungen 18 gleichzeitig hindurchgesteckt werden kann.

Jeder Querträger 7 hat ein U- oder C-förmiges Profil mit zwei Seitenschenkeln 20, 21 und einem dieselben miteinander verbindenden Steg 22. In dem Verbindungssteg 22 jedes Querträgers 7 sind jeweils zwei Bohrungen vorgesehen, etwa im mittleren Bereich des Längsträgers zwischen dessen beiden Stirnseiten 23, etwa auf Höhe der Längsachse des Querträgers 7 und in einem Abstand, welcher dem Abstand zweier nicht miteinander fluchtender Durchgangsbohrungen 18 des als Abstandskörper dienenden Verbindungsstegs 11 eines Pfostenkopfelements 8 entspricht.

Die Außenseiten der Stege 22 zweier Querträger 7 werden an den beiden Längsseiten 17 des Pfostenkopfelements 8 flächig angelegt, so dass die Breite des Verbindungsstegs 11 den Abstand dieser Querträger 7 definiert, während je eine etwa mittige Bohrung in dem Querträger 7 mit einer Bohrung 18 in dem Abstandskörper 11 des Pfostenkopfelements 8 fluchtet. Durch diese Bohrungen 18 werden sodann die Schrauben 19 hindurchgesteckt und mit je einer Mutter oder sonstigem Gewindeelement gekontert, so dass je zwei Querträger 7 über je ein gemeinsames Pfostenkopfelement 8 an einem einzigen Pfosten 4 festgelegt sind.

Dabei entspricht der Neigungswinkel $\alpha$, um welchen die Querträger 7 in Nord-Süd-Richtung geneigt sind, dem Steigungswinkel $\alpha$ des Abstandskörpers 11 eines Pfostenkopfelements 8, nämlich:

$$\alpha = \sin\left[(l_1 - l_2)/d\right].$$

Da dieser Winkel etwa dem gemittelten Sonnenstand während eines Jahres an dem betreffenden Standort entsprechen sollte, der bspw. anhand der Formel:

$$\gamma = 1/a \int_{t_0}^{t_0 + a} \theta_{Sonne}\, d\tau$$

wobei $\theta_{Sonne}$ die Zenitaldistanz der Sonne ist und a ein Jahr beträgt.

Da die Sonneneinstrahlung mittags am stärksten ist, wenn die Sonne jeweils den täglichen, minimalen Zenitalabstand $\theta_{Sonne,min}$ einnimmt, der zwar von dem jeweiligen Breitengrad abhängt, nicht dagegen vom Längengrad oder der Höhe über NN, läßt sich diese Formel vereinfachen zu:

$$\gamma = 1/365 \sum_{1}^{365} \theta_{Sonne,min}$$

Durch Gleichsetzen von $\alpha = \gamma \pm 10\ \%$ bzw. $0{,}9 * \gamma \le \alpha \le 1{,}1 * \gamma$ ergibt sich für das den Neigungswinkel bestimmende Pfostenkopfelement 8 folgende Konstruktionsvorschrift:

$$\arcsin(0{,}9 * \gamma) \le (l_1 - l_2)/d \le \arcsin(1{,}1 * \gamma).$$

Infolge der Verschraubung der Querträger 7 über den jeweiligen Verbindungssteg 22 mit den Längsseiten 17 eines Abstandskörpers 11 weist jeder Querträger 7 einen oberen Seitenschenkel 20 und einen unteren Seitenschenkel 21 auf.

Der obere Seitenschenkel 20 dient der Auflage und Verankerung von wenigstens zwei Längsträgern 24, welche sich über den Raum zwischen zwei Pfosten 4 hinweg von einem Querträger 7 zum nächsten erstrecken. Die Längsträger 24 bestehen ebenfalls aus je einem U- oder C-Profil mit zwei Seitenschenkeln 25, 26 und einem dieselben miteinander verbindenden Steg 27.

Im Bereich seiner beiden Enden 23 ist daher in seiner Oberseite 20 je eine Bohrung 28 vorgesehen, welche mit je einer Bohrung in einem darauf liegenden Seitenschenkel 26 eines aufgelegten Längsträgers 24 fluchtet und deren Verbindung mittels einer Schraube 29 und einem Konterelement erlaubt.

Die Längsträger 24 erstrecken sich jedoch nicht über den Spalt zwischen zwei benachbarten Querträgern 7 desselben Pfostens 4 hinweg. Daher ist die Möglichkeit eröffnet, dass zwei etwa in einer Linie hintereinander angeordnete Längsträger 24 im Bereich eines Pfostens 4 einen Knick miteinander einschließen können und/oder gegeneinander versetzt sind. Dies erlaubt es der Konstruktion 3, sich dem Verlauf eines unebenen Geländes anschmiegen zu können, so dass sich der Abstand der Solarmodule 2 über Grund auch bei sehr großen Solarfeldern nicht merklich ändert.

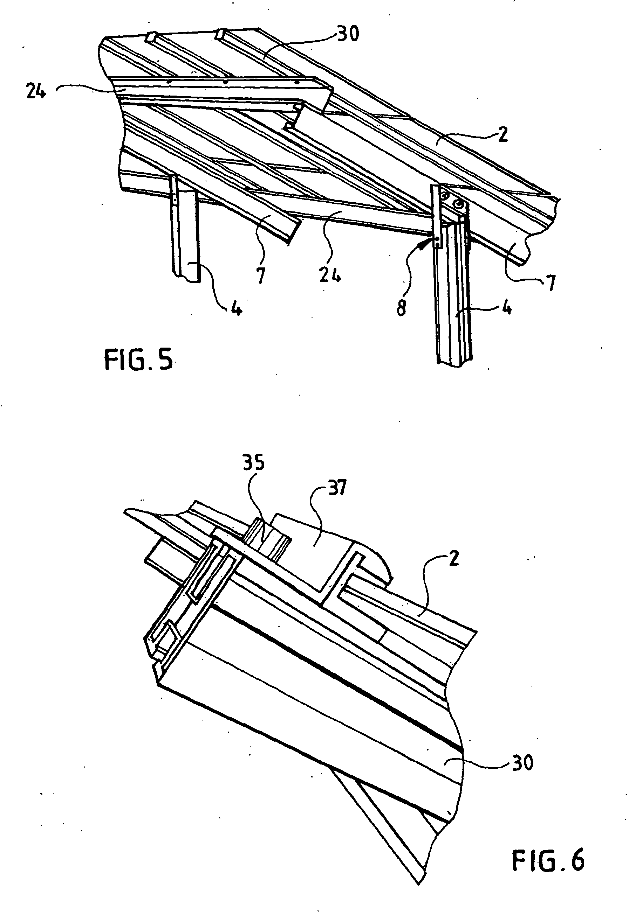

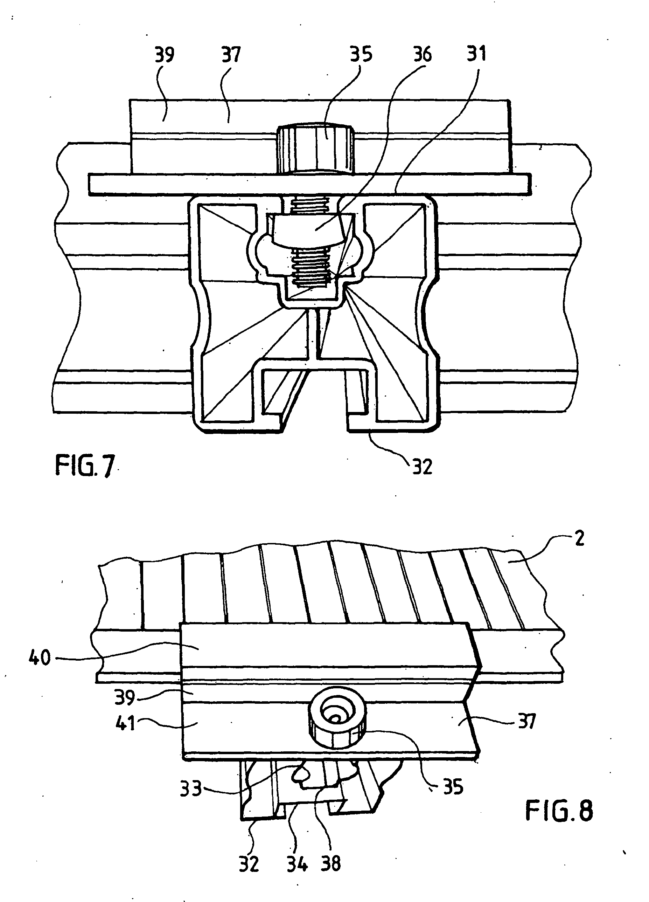

Auf den Oberseiten 25 der Längsträger 24 werden sodann Montageprofile 30 befestigt, insbesondere festgeschraubt. Wie die Fig. 6 und 7 zeigen, sind diese Montageprofile 30 als Hohlprofile ausgebildet mit einem etwa quadratischen Querschnittsumfang; infolge ihrer geschlossenen Mantelfläche ist ihre Stabilität vergleichbar zu den Längs- und Querträgern 24, 7, obwohl die Kantenlänge ihres Querschnitts kleiner ist.

Die Vierkant-Hohlprofile 30 haben an ihrer Ober- und Unterseite 31, 32 je eine Längsnut 33, 34 mit je einer Hinterschneidung bzw. Verengung an der Mündung in die Ober- bzw. Unterseite 31, 32. Diese Längsnuten 33, 34 dienen der Aufnahme von Befestigungsmitteln, insbesondere Schrauben 35 und/oder Muttern 36, zur Festlegung an den Längsträgern 24 einerseits sowie zur Verbindung mit Halteklammern 37 andererseits. Zwischen dem Grund der beiden Längsnuten 33, 34 erstreckt sich ein Versteifungssteg 38.

Die Halteklammern 37 können einen etwa Z-förmigen Querschnitt haben mit einem Mittelsteg 39 und zwei davon in antiparallelen Richtungen auskragenden Seitenschenkeln 40, 41, wovon der untere Schenkel 41 der Verbindung mit einem Montageprofil 30 dient und der obere Schenkel 40 die Kante eines Solarmoduls 2 übergreift.

**Patentansprüche**

1. Vorrichtung (3) zur Aufständerung von Solarmodulen (2), mit mehreren, in einer Reihe aufgestellten und verankerten Pfosten (4), an denen im Bereich ihrer oberen Enden (8) etwa quer zu der Pfostenreihe ausgerichtete Querträger (7) befestigt sind, und mit mehreren, etwa parallel zu der Pfostenreihe (4) verlaufenden Längsträgern (24), welche an den Querträgern (7) festgelegt sind, **dadurch gekennzeichnet, dass** an wenigstens einem Pfosten (4) zwei Querträger (7) befestigt sind, derart, dass die Neigung der Oberseiten (20) ihrer Profile gegenüber der Horizontalen unabhängig voneinander ist, wobei die Ebenen der Oberseiten beider Querträger eines gemeinsamen Pfostens zusammenfallen oder parallel zueinander verlaufen oder sich im Bereich des Pfostenkopfs schneiden, und wobei sich die Längsträger (24) nicht über den Spalt zwischen zwei benachbarten Querträgern (7) desselben Pfostens (4) hinweg erstrecken.

2. Vorrichtung nach Anspruch 1, **dadurch gekennzeichnet, dass** die an dem selben Pfosten (4) befestigten Querträger (7) nur über den gemeinsamen Pfosten (4) oder ein damit verbundenes Element (8), jedoch nicht über dazwischen oder darüber hinweg laufende Längsträger (24) miteinander verbunden sind.

3. Vorrichtung nach Anspruch 1 oder 2, **dadurch gekennzeichnet, dass** die an dem selben Pfosten (4) befestigten Querträger (7) in zueinander etwa parallelen Vertikalebenen verlaufen.

4. Vorrichtung nach einem der Ansprüche 1 bis 3, **dadurch gekennzeichnet, dass** die an dem selben Pfosten (4) befestigten Querträger (7) oder deren Vertikalebenen einen Abstand voneinander aufweisen.

5. Vorrichtung nach einem der vorhergehenden Ansprüche, **dadurch gekennzeichnet, dass** der Abstand zwischen den am selben Pfosten (4) befestigten Querträgern (7) oder zwischen deren Vertikalebenen etwa der dazu parallelen Breite des betreffenden Pfostens (4) entspricht.

6. Vorrichtung nach einem der vorhergehenden Ansprüche, **dadurch gekennzeichnet, dass** die Querträger (7) an einander gegenüber liegenden Längsseiten (17) eines an einem Pfosten (4) festgelegten Abstandskörpers (8,11) befestigt sind.

7. Vorrichtung nach Anspruch 6, **dadurch gekennzeichnet, dass** der Abstandskörper (11) wenigstens eine, vorzugsweise zwei oder mehr Bohrungen (18) aufweist, welche von einer Längsseite (17) zur anderen durchgehend ausgebildet sind.

8. Vorrichtung nach Anspruch 6 oder 7, **dadurch gekennzeichnet, dass** der Abstandskörper (11) als Profil mit einem konstanten Querschnitt ausgebildet ist.

9. Vorrichtung nach einem der Ansprüche 6 bis 8, **dadurch gekennzeichnet, dass** der Abstandskörper (11) als Hohlprofil ausgebildet ist.

10. Vorrichtung nach einem der Ansprüche 6 bis 9, **dadurch gekennzeichnet, dass** der Abstandskörper (11) einen rechteckigen oder quadratischen Außenquerschnitt aufweist.

11. Vorrichtung nach einem der Ansprüche 6 bis 10, **dadurch gekennzeichnet, dass** die beiden Stirnseiten des Abstandskörpers (11) entlang je einer Ebene verlaufen, die von der Längsachse (14) des Abstandskörper-Profils (11) nicht lotrecht durchsetzt wird, sondern unter einem Winkel von 75° oder weniger, vorzugsweise unter einem Winkel von 70° oder weniger, insbesondere unter einem Winkel von 65° oder weniger.

12. Vorrichtung nach einem der Ansprüche 6 bis 11, **dadurch gekennzeichnet, dass** die beiden Stirnseiten des Abstandskörpers (11) entlang zueinander paralleler Ebenen verlaufen.

13. Vorrichtung nach einem der Ansprüche 6 bis 12, **dadurch gekennzeichnet, dass** der Abstandskörper (11) im Bereich seiner Stirnseiten an je einer Befestigungsplatte (9,10) festgelegt ist, bspw. mit denselben verschweißt (Schweißnähte 16).

14. Vorrichtung nach Anspruch 13, **dadurch gekennzeichnet, dass** der Abstandskörper (11) zusammen mit seinen Befestigungsplatten (9,10) im Bereich des oberen Endes eines Pfostens (4) festgelegt ist, insbesondere als diese übergreifendes Pfostenkopfelement (8).

15. Vorrichtung nach Anspruch 13 oder 14, **dadurch gekennzeichnet, dass** die beiden Befestigungsplatten (9,10) parallel zueinander verlaufen.

16. Vorrichtung nach einem der Ansprüche 13 bis 15, **dadurch gekennzeichnet, dass** eine der beiden Befestigungsplatten (9,10) länger ist als die andere, bspw. um 20 mm länger oder mehr, vorzugsweise um 30 mm oder mehr, insbesondere um 40 mm oder mehr.

17. Vorrichtung nach einem der Ansprüche 14 bis 16, **dadurch gekennzeichnet, dass** ein Pfostenkopfelement (8) an dem betreffenden Pfosten (4) festgeschraubt ist.

18. Vorrichtung nach Anspruch 17, **dadurch gekennzeichnet, dass** beide Befestigungsplatten (9,10) im Bereich ihres unteren Endes wenigstens je eine Durchgangsbohrung (13) aufweisen.

19. Vorrichtung nach Anspruch 18, **dadurch gekennzeichnet, dass** je eine Durchgangsbohrung (13) beider Befestigungsplatten (9,10) im Bereich ihres unteren Endes als Langloch ausgebildet ist.

20. Vorrichtung nach einem der vorhergehenden Ansprüche, **dadurch gekennzeichnet, dass** die Querträger (7) einen U- oder C-förmigen Querschnitt aufweisen mit zwei Schenkeln (20,21) und einem dieselben miteinander verbindenden Mittelsteg (22).

21. Vorrichtung nach Anspruch 20, **dadurch gekennzeichnet, dass** die Querträger (7) jeweils mit den Außenseiten ihrer Mittelstege (22) flächig an dem betreffenden Abstandskörper (11) und/oder Pfostenkopfelement (8) anliegen.

22. Vorrichtung nach einem der vorhergehenden Ansprüche, **dadurch gekennzeichnet, dass** ein oder mehrere Längsträger (24) an den Oberseiten (20) von einander benachbarten Querträgern (7) unterschiedlicher Pfosten (4) festgelegt sind.

23. Vorrichtung nach einem der vorhergehenden Ansprüche, **dadurch gekennzeichnet, dass** an den Oberseiten (25) zweier Längsträger (24), welche an den selben Querträgern (7) festgelegt sind, ein oder mehrere Montageprofile (30) festgelegt sind.

**Claims**

1. Device (3) for supporting solar modules (2) with several posts (4) arranged in a row and anchored, on which upper ends (8) of said posts support bars (7) are mounted approximately directed crosswise to the row of posts, and with several longitudinal supports (24) running approximately parallel to the row of posts (4) which supports are mounted on the cross supports (7) **characterized in that** two cross supports (7) are mounted on at least one post (4) in such a manner that the inclination of the top sides (20) of their profiles is not dependent on the horizontals, wherein the planes of the upper sides of both cross supports of a common post fall together or run parallel to each other or intersect each other in the area of the post head, and wherein the longitudinal supports (24) do not stretch over the gap between two adjacent cross supports (7) of the same post (4).

2. Device as defined in claim 1, **characterized in that** the cross supports (7) mounted on the same post (4) are only connected with each other via the common post (4) or an element (8) connected thereto, but not via longitudinal supports (24) connected in between or extending away.

3. Device as defined in claim 1 or 2, **characterized in that** the cross supports (7) mounted on the same post (4) run approximately parallel vertical planes to each other.

4. Device as defined in one of the claims 1 to 3, **characterized in that** the cross supports (7) mounted on the same post (4) or their vertical planes have a distance between each other.

5. Device as defined in one of the preceding claims, **characterized in that** the distance between the cross supports (7) mounted on the same posts (4) or between their vertical planes corresponds approximately to the parallel width of the applicable post (4).

6. Device as defined in one of the preceding claims, **characterized in that** the cross supports (7) are mounted on their opposite longitudinal sides (17) on a spacer member (8, 11) set by a post (4).

7. Device as defined in claim 6, **characterized in that** the spacer member (11) has at least one, preferably two or more bored holes (18) which are designed as continuous from one longitudinal side (17) to the other.

8. Device as defined in claim 6 or 7, **characterized in that** the spacer member (11) is designed as a profile with a constant cross section.

9. Device as defined in one of claims 6 to 8, **characterized in that** the spacer member (11) is designed as a hollow profile.

10. Device as defined in one of the claims 6 to 9, **characterized in that** the spacer member (11) has a rectangular or square exterior cross section.

11. Device as defined in one of the claims 6 to 10, **characterized in that** the two front sides of the spacer member (11) each run along one plane which is not perpendicular from the longitudinal axis (14) of the spacer member profile (11), but instead is at an angle of 75° or less, preferably et an angle of 70° or less, particularly at an angle of 65° or less.

12. Device as defined in one of the claims 6 to 11, **characterized in that** the two front sides of the spacer member (11) run along on a plane parallel to each other.

13. Device as defined in one of the claims 6 to 12, **characterized in that** the spacer member (11) is set in the area of its front sides to one each mounting plate (9, 10) or is welded with same (welding seams 16).

14. Device as defined in claim 13, **characterized in that** the spacer member (11) is set together with its mounting plates (9, 10) in the area of the upper end of a post (4), in particular as this overlapping post head element (8).

15. Device as defined in claim 13 or 14, **characterized in that** both the mounting plates (9, 10) run parallel to each other.

16. Device as defined in one of the claims 13 to 15, **characterized in that** one of the two mounting plates (9, 10) is longer than the other, for example, 20 mm or more longer, preferably 30 mm or more longer, in particular 40 mm or more longer.

17. Device as defined in one of the claims 14 to 16, **characterized in that** a post head element (8) is screwed tight to the applicable post (4).

18. Device as defined in claim 17, **characterized in that** both mounting plates (9, 10) have at least one through bored hole (13) in the area of their lower end.

19. Device as defined in claim 18, **characterized in that** one each through bored hole (13) of both mounting plates (9, 10) is designed as a longitudinal hole in the area of their lower end.

20. Device as defined in one of the preceding claims, **characterized in that** the cross supports (7) have a U or C-shaped cross section with two legs (20, 21) and a middle bar (22) connecting same with each other.

21. Device as defined in claim 20, **characterized in that** the cross supports (7) each rest on the exterior of their middle bars (22) laterally on the applicable spacer member (11) and/or post head element (8).

22. Device as defined in one of the preceding claims, **characterized in that** one or more longitudinal supports (24) are set on the upper sides (20) by adjacent cross supports (7) on different posts (4).

23. Device as defined in one of the preceding claims, **characterized in that** one or more assembly profiles (30) are set on the upper sides (25) of two longitudinal supports (24) which are set on the same cross supports (7).

**Revendications**

1. Dispositif (3) de montage de modules solaires (2) comprenant plusieurs montants (4) ancrés et alignés, au niveau des extrémités supérieures (8) desquels sont fixées des barres transversales (7) orientées approximativement transversalement par rapport à la rangée de montants, et plusieurs barres longitudinales (24) s'étendant approximativement parallèlement à la rangée de montants (4) et fixées aux barres transversales (7), **caractérisé en ce que** deux barres transversales (7) sont fixées à au moins un montant (4) de façon telle que l'inclinaison, par rapport à l'horizontale, des parties supérieures (20) de leurs profilés soit indépendante l'une de l'autre, les plans des parties supérieures des deux barres transversales d'un montant commun coïncidant ou s'étendant parallèlement les uns par rapport aux autres ou se coupant au niveau de la tête du montant, et les barres longitudinales (24) ne s'étendant pas au-dessus de l'espacement entre deux barres transversales (7) adjacentes du même montant (4).

2. Dispositif selon la revendication 1, **caractérisé en ce que** les barres transversales (7) fixées sur le même montant (4) sont reliées entre elles uniquement par l'intermédiaire du montant commun (4) ou par un élément (8) qui y est relié, mais toutefois pas par l'intermédiaire des barres longitudinales (24) qui y sont interposées ou s'étendant au-delà.

3. Dispositif selon la revendication 1 ou 2, **caractérisé en ce que** les barres transversales (7) fixées sur le même montant (4) convergent approximativement dans des plans verticaux parallèles.

4. Dispositif selon l'une des revendications 1 à 3, **caractérisé en ce que** les barres transversales (7) fixées sur le même montant (4) ou leurs plans verticaux présentent un espacement entre eux.

5. Dispositif selon l'une des revendications précédentes, **caractérisé en ce que** l'espacement entre les barres transversales (7) fixées sur le même montant (4) ou entre leurs plans verticaux correspond approximativement à la largeur parallèle du montant (4) en question.

6. Dispositif selon l'une des revendications précédentes, **caractérisé en ce que** les barres transversales (7) sont fixées sur les grands côtés (17) opposés les uns par rapport aux autres d'un espaceur (8, 11) monté sur un montant (4).

7. Dispositif selon la revendication 6, **caractérisé en ce que** l'espaceur (11) présente au moins un, de préférence deux ou plusieurs trous (18) qui sent agencés de manière traversante d'un grand côté (17) à l'autre.

8. Dispositif selon la revendication 6 ou7, **caractérisé en ce que** l'espaceur (11) est réalisé sous forme de profil présentant une section constante.

9. Dispositif selon l'une des revendications 6 à 8, **caractérisé en ce que** l'espaceur (11) est réalisé sous forme de profil creux.

10. Dispositif selon l'une des revendications 6 à 9, **caractérisé en ce que** l'espaceur (11) présente une section extérieure rectangulaire ou carrée.

11. Dispositif selon l'une des revendications 6 à 10, **caractérisé en ce que** les deux parties frontales de l'espaceur (11) s'étendent sur la longueur respectivement d'un plan qui n'est pas traversé perpendiculairement par l'axe longitudinal (14) du profil de l'espaceur (11) mais selon un angle de 75 ° ou moins, de préférence selon un angle de 70 ° ou moins, en particulier selon un angle de 65 ° ou moins.

**12.** Dispositif selon l'une des revendications 6 à 11, **caractérisé en ce que** les deux parties frontales de l'espaceur (11) s'étendent sur la longueur des plans parallèles les uns par rapport aux autres.

**13.** Dispositif selon l'une des revendications 6 à 12, **caractérisé en ce que** l'espaceur (11) est fixé au niveau de ses parties frontales sur respectivement une plaque de fixation (9, 10), par exemple soudé à ces dernières (soudures 16).

**14.** Dispositif selon la revendication 13, **caractérisé en ce que** l'espaceur (11) avec ses plaques de fixation (9, 10) est fixé au niveau de l'extrémité supérieure d'un montant (4), en particulier comme cet élément de tête de montant chevauchant (8).

**15.** Dispositif selon la revendication 13 ou 14, **caractérisé en ce que** les deux plaques de fixation (9, 10) s'étendent parallèlement l'une par rapport à l'autre.

**16.** Dispositif selon l'une des revendications 13 à 15, **caractérisé en ce que** l'une des deux plaques de fixation (9, 10) est plus longue que l'autre, par exemple 20 mm plus longue ou plus, de préférence 30 mm ou plus, en particulier 40 mm ou plus.

**17.** Dispositif selon l'une des revendications 14 à 16, **caractérisé en ce qu'**un élément de tête de montant (8) est vissé sur le montant (4) en question.

**18.** Dispositif selon la revendication 17, **caractérisé en ce que** les deux plaques de fixation (9, 10) présentent au niveau de leur extrémité inférieure au moins respectivement un trou traversant (13).

**19.** Dispositif selon la revendication 18, **caractérisé en ce que** respectivement un trou traversant (13) des deux plaques de fixation (9, 10) au niveau de leur extrémité inférieure est réalisé sous forme de trou oblong.

**20.** Dispositif selon l'une des revendications précédentes, **caractérisé en ce que** les barres transversales (7) présentent une section en U ou en C avec deux côtés (20, 21) et un montant central (22) les reliant entre eux.

**21.** Dispositif selon la revendication 20, **caractérisé en ce que** les barres transversales (7) respectivement avec les cotés extérieurs de leurs montants centraux (22) s'appliquent de manière plane sur l'espaceur (11) en question et/ou l'élément de tête de montant (8) .

**22.** Dispositif selon l'une des revendications précédentes, **caractérisé en ce qu'**une ou plusieurs barres longitudinales (24) sont fixées sur les parties supérieures (20) de barres transversales (7) adjacentes l'une par rapport à l'autre de différents montants (4).

**23.** Dispositif selon l'une des revendications précédentes, **caractérisé en ce que** sur les parties supérieures (25) de deux barres longitudinales (24) qui sont fixées sur les mémes barres transversales (7), sont fixés un ou plusieurs profilés de montage (30).

FIG.1

FIG.2

FIG.3

FIG.4

FIG. 5

FIG. 6

FIG.7

FIG.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202005008159 U1